# EUROPÄISCHE PATENTSCHRIFT

(11) **EP 3 371 562 B1**
(45) Veröffentlichungstag und Bekanntmachung des Hinweises auf die Patenterteilung: **13.05.2020**
(21) Anmeldenummer: 16782242.8
(22) Anmeldetag: 18.10.2016
(51) Int. Cl.: G01K 7/16

(54) **SENSORELEMENT UND VERFAHREN ZUR HERSTELLUNG EINES SENSORELEMENTS**
SENSOR ELEMENT AND METHOD FOR PRODUCING A SENSOR ELEMENT
ÉLÉMENT CAPTEUR ET PROCÉDÉ DE FABRICATION D'UN ÉLÉMENT CAPTEUR

(30) Priorität: 02.11.2015 DE 102015118720; 25.01.2016 DE 102016101248
(43) Veröffentlichungstag der Anmeldung: 12.09.2018
(73) Patentinhaber: TDK Electronics AG, 81671 München (DE)
(72) Erfinder: IHLE, Jan, 8071 Grambach (AT); WEIDENFELDER, Anke, 272-0023 Ichikawa-shi CHIBA-KEN (JP); MEAD, Christl Lisa, 8543 St. Martin i.S. (AT); KLOIBER, Gerald, 8073 Feldkirchen (AT)
(74) Vertreter: Epping - Hermann - Fischer
(86) Internationale Anmeldenummer: PCT/EP2016/074942
(87) Internationale Veröffentlichungsnummer: WO 2017/076631

(56) Entgegenhaltungen:
- EP-A1- 0 809 094
- DE-A1- 3 634 132

## Beschreibung

Es wird ein Sensorelement angegeben. Das Sensorelement kann insbesondere zur Messung einer Temperatur dienen.
Beispielsweise handelt es sich um ein NTC-Sensorelement (negative temperature coefficient), also um einen Heißleiter. Ferner wird ein Verfahren zur Herstellung eines Sensorelements angegeben.

Nach dem Stand der Technik werden Temperaturen für die Überwachung und Regelung in unterschiedlichsten Anwendungen vorwiegend mit keramischen Heißleiter-Thermistorelementen (NTC), Silizium-Temperatursensoren (KTY), Platin-Temperatursensoren (PRTD) oder Thermoelementen (TC) gemessen. Dabei sind auf Grund der geringen Herstellungskosten die NTC-Thermistoren am weitesten verbreitet. Ein weiterer Vorteil gegenüber Thermoelementen und metallischen Widerstandselementen, wie z.B. Pt-Elementen, besteht in der ausgeprägten negativen Widerstands-Temperatur-Charakteristik.

Für den Einsatz in Leistungsmodulen werden vorwiegend SMD NTC-Temperatursensoren verwendet, die aufgelötet werden. Bei Steuermodulen für geringe Leistungen werden alternativ dazu auch NTC-Chips eingesetzt, die an der Unterseite mittels Ag-Sintern, Löten oder Kleben montiert sind und deren Oberseite über einen Bonddraht kontaktiert wird.

Für eine elektrische Kontaktierung der NTC-Keramik müssen metallische Elektroden aufgebracht werden. Nach dem Stand der Technik werden dazu Dickschichtelektroden vorwiegend aus

Silber- oder Gold-Pasten über einen Siebdruckprozess mit anschließendem Einbrand aufgebracht.

Die Silber-Metallisierungen eignen sich besonders für Lötverbindungen. Aufgrund der steigenden technologischen Anforderungen hinsichtlich neuer zuverlässiger Anschlußkontaktierungen wie Bonden und Schweißen, ist speziell beim Bonden mit Gold- oder Aluminium- bzw. Kupferdrähten eine andere Elektrode notwendig, da eine Anbindung an Silber keine ausreichende Zuverlässigkeit aufweist.

Im Falle von Gold-Metallisierungen können Lötverbindungen zu Anschlussdrähten nicht realisiert werden. Bondverbindungen werden aus Kostengründen nur mit Gold-Dünndraht realisiert. Aluminium-Bonddrahtverbindungen auf Gold-Elektroden erreichen nicht die Zuverlässigkeitsanforderungen.

Aufgrund der steigenden Anforderungen bezüglich Einsatztemperatur und Zuverlässigkeit besteht ferner die Forderung nach NTC-Temperatursensoren, die ohne Lötmontage auf die Platine aufgebracht werden können und die eine hohe Langzeitstabilität aufweisen sowie für höhere Einsatztemperaturen geeignet sind.

Das Dokument De 36 34 132 A1 betrifft einen Sensor, der eine Oberfläche hat, die zu einer geeigneten vorbestimmten optimalen Form gestaltet bzw. geformt ist, und zwar durch ein künstliches reproduzierbares Verfahren, wie beispielsweise eine Feinbearbeitungstechnik, so dass die Struktur des Sensors bzw. der Sensor eine verbesserte Leistungsfähigkeit aufweist.

Eine zu lösende Aufgabe besteht darin, ein Sensorelement anzugeben, welches verbesserte Eigenschaften aufweist.

Diese Aufgabe wird durch ein Sensorelement gemäß der unabhängigen Ansprüche gelöst.

Gemäß einem Aspekt wird ein Sensorelement zur Temperaturmessung angegeben. Das Sensorelement weist vorzugsweise ein keramisches Sensormaterial auf. Das Sensormaterial ist in Form von wenigstens einer NTC-Schicht im Sensorelement angeordnet. Das Sensorelement ist vorzugsweise ein NTC-Sensorchip. Besonders bevorzugt ist das Sensorelement ein NTC-Dickschichtsensor. Das Sensorelement weist einen keramischen Träger auf. Der Träger ist mit der NTC-Schicht zumindest teilweise bedruckt. Die NTC-Schicht bedeckt zumindest einen Teil einer Oberfläche des Trägers. Mit anderen Worten, die NTC-Schicht kann die komplette Trägeroberfläche oder auch nur einen Teil der Trägeroberfläche bedecken. Beispielsweise bedeckt die NTC-Schicht eine Unterseite des Trägers zumindest teilweise. Die NTC-Schicht kann eine erste Oberfläche des Trägers, beispielsweise die Unterseite des Trägers, aber auch vollständig bedecken. Das Sensorelement ist zu einer drahtlosen Kontaktierung ausgebildet.

Gemäß einem Ausführungsbeispiel weist das Sensorelement wenigstens eine Elektrode, vorzugsweise wenigstens zwei Elektroden auf. Die Elektroden sind auf der NTC-Schicht angeordnet, beispielsweise in Form von zwei Elektrodenpads. Die Elektroden befinden sich demnach vorzugsweise auf der gleichen Seite, beispielsweise der Unterseite, des Sensorelements. Die Elektroden sind räumlich voneinander getrennt. Beispielsweise sind die Elektroden durch einen Freibereich voneinander separiert. Der Freibereich kann beispielsweise in Form eines Steges ausgebildet sein. Die Elektroden sind durch den Steg voneinander separiert.

Vorzugsweise weist der Freibereich keramisches Sensormaterial auf. Das Sensorelement ist so ausgebildet, dass eine drahtlose Kontaktierung des Sensorelements ermöglicht ist. Insbesondere sind die Elektroden so ausgebildet und angeordnet, dass die Elektroden silbersinterbar sind. Damit wird ein flexibel einsetzbares Sensorelement bereitgestellt.

Gemäß einem Ausführungsbeispiel kann eine Dicke der NTC-Schicht bzw. ein Widerstand der NTC-Schicht durch eine Anzahl von Bedruckungsvorgängen eingestellt werden. Je höher die Anzahl der Bedruckungsvorgänge während eines Herstellungsprozesses, desto dicker ist die NTC-Schicht und desto größer ist deren Widerstand. Je geringer die Anzahl der Bedruckungsvorgänge während des Herstellungsprozesses, desto dünner ist die NTC-Schicht und desto geringer ist deren Widerstand.

Gemäß einem Ausführungsbeispiel weist die jeweilige Elektrode wenigstens eine gesputterte Schicht auf. Die Elektroden sind beispielsweise Dünnschichtelektroden. Die gesputterte Schicht ist vorzugsweise direkt auf die NTC-Schicht aufgebracht. Die wenigstens eine gesputterte Schicht weist vorzugsweise Nickel auf. Ferner kann die Schicht Anteile von Vanadium aufweisen. In einer weiteren Ausführungsform weist die Elektrode zwei Schichten auf, wobei eine untere Schicht Chrom oder Titan aufweist und eine zweite Schicht Nickel aufweist, wobei die zweite Schicht ebenfalls Anteile von Vanadium aufweisen kann. Vorteilhafterweise wird für die beschriebenen Ausführungsformen eine Deckschicht auf die Nickelschicht aufgebracht. Diese Deckschicht besteht aus einem oxidationshemmenden Metall, wie zum Beispiel Silber oder Gold.

Gemäß einem Ausführungsbeispiel weist die jeweilige Elektrode wenigstens eine aufgedruckte Schicht auf. Die Elektroden sind beispielsweise Dickschichtelektroden. Die aufgedruckte Schicht ist vorzugsweise direkt auf die NTC-Schicht aufgedruckt. Durch den Druckvorgang können dickere Elektrodenschichten realisiert werden.

Gemäß der Erfindung weist die NTC-Schicht eine Aussparung auf. Die Aussparung ist dazu vorgesehen, den Widerstand der NTC-Schicht einzustellen. Im Fall von sehr eng tolerierten Widerständen kann ein so genannter Trimmprozess zur Einstellung des Widerstands bei Nenntemperatur erfolgen. Dabei wird durch partiellen Laserabtrag ein Teilbereich, beispielsweise der NTC-Schicht entfernt, so dass eine Aussparung entsteht. Durch den Trimmprozess wird die Geometrie der Schicht geändert und der Widerstand entsprechend eines Vorgabewertes angepasst.

Durch das oben beschriebene Design des NTC-Dickschichtsensors kann dieser in nur einem Prozessschritt (Drucksintern oder Löten) auf Platinen aufgebracht werden. Eine weitere Kontaktierung, z.B. mittels Bonden, entfällt dadurch. Weiterhin besteht ein Vorteil in der geringeren thermischen Belastung des NTC-Chips im Herstellungsprozess. Somit wird ein NTC-Temperatursensor mit kostengünstigem Elektrodensystem bereitgestellt, welcher darüber hinaus eine drahtlose Kontaktierung des NTC-Temperatursensors ermöglicht.

Gemäß einem Aspekt wird ein Verfahren zur Herstellung eines Sensorelements beschrieben. Vorzugsweise wird durch das Verfahren das oben beschriebene Sensorelement hergestellt. Alle Eigenschaften, die in Bezug auf das Sensorelement oder das Verfahren offenbart sind, sind auch entsprechend in Bezug auf die jeweiligen anderen Aspekte offenbart und umgekehrt, auch wenn die jeweilige Eigenschaft nicht explizit im Kontext des jeweiligen Aspekts erwähnt wird.

Das Verfahren weist die folgenden Schritte auf:
- Bereitstellen eines keramischen Trägermaterials.
   Als Trägermaterial dient ein keramisches Substrat auf Basis von z.B. Al₂O₃, Zr0₂, ATZ- bzw. ZTA-Materialien oder MgO.
- Zumindest teilweises Bedrucken des Trägermaterials mit einer NTC-Paste zu Ausbildung einer NTC-Schicht. Die NTC-Paste besteht auf Basis von Perowskiten im System Y-Ca-Cr-Al-O mit diversen Dotierungen oder Spinellen im System Ni-Co-Mn-O mit diversen Dotierungen. Das Bedrucken des Trägermaterials erfolgt in wenigstens einem Bedruckungsvorgang, vorzugsweise in mehreren Bedruckungsvorgängen. Beispielsweise werden zwei, drei, fünf oder zehn Bedruckungsvorgänge durchgeführt. Eine Dicke und ein Widerstand der NTC-Schicht wird vorzugsweise durch eine Anzahl der Bedruckungsvorgänge eingestellt.
- Sintern des Systems aus Trägermaterial und NTC-Paste.
- Aufsputtern von Dünnschichtelektroden auf die NTC-Schicht. Alternativ dazu können die Elektroden auch auf die NTC-Schicht aufgedruckt werden (Dickschichtelektroden).
- Partielles Entfernen der NTC-Schicht durch Laserabtrag zur Einstellung eines vorbestimmten Widerstandswerts.

Gemäß einem Aspekt wird ein Sensorelement zur Temperaturmessung angegeben, aufweisend
- einen keramischen Träger,
- wenigstens zwei Elektroden,
- wenigstens eine NTC-Schicht, wobei der Träger mit der NTC-Schicht bedruckt ist, wobei die NTC-Schicht zumindest einen Teil einer Oberfläche des Trägers bedeckt,
wobei die Elektroden auf der NTC-Schicht angeordnet sind, wobei die Elektroden räumlich voneinander getrennt sind, und wobei das Sensorelement so ausgebildet ist, dass eine drahtlose Kontaktierung des Sensorelements ermöglicht ist.

Das Sensorelement wird im Folgenden anhand von Ausführungsbeispielen und den dazugehörigen Figuren näher erläutert.

Die nachfolgend beschriebenen Zeichnungen sind nicht als maßstabsgetreu aufzufassen. Vielmehr können zur besseren Darstellung einzelne Dimensionen vergrößert, verkleinert oder auch verzerrt dargestellt sein.

Elemente, die einander gleichen oder die die gleiche Funktion übernehmen, sind mit gleichen Bezugszeichen bezeichnet.
- Figur 1: zeigt ein Sensorelement in einer ersten Ausführungsform,
- Figur 2: zeigt das Sensorelement in einer weiteren Ausführungsform,
- Figur 3: zeigt das Sensorelement in einer weiteren Ausführungsform,
- Figur 4: zeigt das Sensorelement in einer weiteren Ausführungsform.

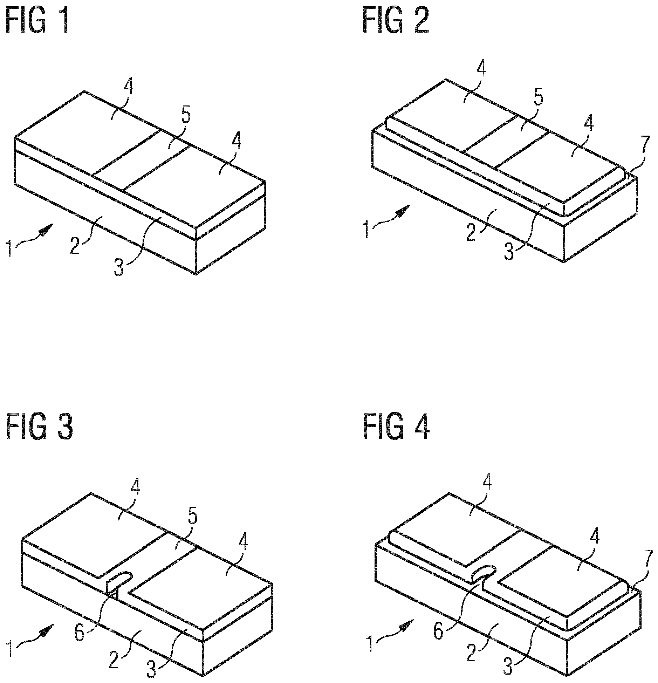

Die Figur 1 zeigt ein Sensorelement 1, insbesondere einen Sensorchip. Das Sensorelement 1 ist vorzugsweise zur Messung einer Temperatur ausgebildet. Das Sensorelement 1 weist ein keramisches Sensormaterial auf. Das keramische Sensormaterial ist in Form einer NTC-Schicht 3 ausgebildet. Das Sensorelement 1 ist ein NTC-Dickschichtsensor. Die NTC-Schicht kann eine Dicke zwischen 5 µm und 200 µm aufweisen. Vorzugsweise liegt die Schichtdicke zwischen 10 µm und 100 µm.

Das Sensormaterial ist eine NTC-Keramik. Beispielsweise weist die Keramik eine Perowskitstruktur auf. Insbesondere kann die Keramik auf dem System Y-Ca-Cr-Al-O mit diversen Dotierungen beruhen. Ein derartiges Sensorelement 1 eignet sich besonders für Hochtemperaturanwendungen. Alternativ kann das Sensorelement 1, insbesondere bei geringeren Anwendungstemperaturen, eine Keramik mit einer Spinellstruktur aufweisen. Beispielsweise kann die Keramik auf dem System Ni-Co-Mn-O mit diversen Dotierungen beruhen.

Der NTC-Dickschichtsensor besteht aus einem keramischen Träger 2 auf den die NTC-Schicht 3 gedruckt ist. Als Trägermaterial dient ein keramisches Substrat auf Basis von z.B. Al₂O₃, Zr0₂, ATZ- bzw. ZTA-Materialien oder MgO. Diese werden mit NTC-Pasten auf Basis von Perowskiten im System Y-Ca-Cr-Al-0 mit diversen Dotierungen oder Spinellen im System Ni-Co-Mn-0 mit diversen Dotierungen bedruckt und eingebrannt.

Auf die NTC-Schicht 3 sind - im Anschluss an den Einbrand - Elektroden 4 angebracht. Die Elektroden 4 sind auf der gleichen Außenfläche des Sensors 1, beispielsweise einer Unterseite des Sensors 1, aufgebracht. Insbesondere sind die Elektroden 4 auf einer Unterseite der NTC-Schicht 3 angebracht. Die Elektroden 4 sind räumlich separiert angeordnet. Die Elektroden 4 sind durch einen Freibereich 5 voneinander getrennt. Der Freibereich 5 ist frei von Elektrodenmaterial bzw. kann mit einer Schutzschicht gefüllt sein.

Auf die NTC-Schicht 3 werden die Elektroden 4 mittels Siebdruck oder Sputtertechnologie (PVD-Prozess) aufgebracht, wie weiter unten im Detail beschrieben wird.

Die Figur 2 zeigt ein Sensorelement 1 mit Freirand 7. Im Unterschied zu dem in Figur 1 gezeigten Sensorelement 1 ist bei dem in Figur 2 gezeigten Sensorelement 1 ein umlaufender Randbereich des Trägers 2 frei von Sensormaterial bzw. frei von der NTC-Schicht 3. In Figur 1 bedeckt das Sensormaterial (NTC-Schicht 3) hingegen eine Außenfläche des Trägers 2, beispielsweise die Unterseite des Trägers 2, vollständig.

In diesem Ausführungsbeispiel ist der Freirand 7 umlaufend. Jedoch kann der Freirand 7 auch nur teilweise umlaufend sein.

Die Geometrie der NTC-Schicht 3 bzw. ein Bedeckungsgrad des Trägers 2 durch die NTC-Schicht 3 werden durch den Bedruckungsprozess des Trägers 2 mit der NTC-Schicht 3 festgelegt. Insbesondere kann beim Bedrucken des Trägers 2 mit NTC-Paste ein entsprechender Rand am Träger 2 von NTC-Paste ausgespart werden, um einen Freirand 7 zu erhalten.

Im Falle von sehr eng tolerierten Widerständen kann ein so genannter Trimmprozess zur Einstellung des Widerstandes bei Nenntemperatur beispielsweise durch partiellen Laserabtrag erfolgen. Ein entsprechendes Ausführungsbeispiel zeigen die Figuren 3 und 4. Insbesondere ist bei den in den Figuren 3 und 4 gezeigten Sensorelementen 1 ein Teilbereich der NTC-Schicht 3 zwischen den Elektroden 4 partiell durch Laserabtrag entfernt worden. Mit anderen Worten, aus dem Freibereich 5 der NTC-Schicht 3, welcher die Elektroden 4 voneinander trennt, wurde ein Bereich entfernt. Die NTC-Schicht 3 weist an dieser Stelle eine Aussparung 6 auf. Dies führt zu einer veränderten Geometrie der NTC-Schicht 3, wodurch der Widerstand der NTC-Schicht 3 bzw. des Sensorelements 1 eingestellt wird.

In Figur 4 ist ferner wieder ein Freirand 7 zu erkennen. Insbesondere ist bei dem in Figur 4 gezeigten Sensorelement 1 ein umlaufender Randbereich des Trägers 2 frei von Sensormaterial.

Erfindungsgemäß sind folglich zwei Sensortypen zu unterscheiden, wobei in einer ersten Ausführung die NTC-Dickschicht 3 die komplette Trägeroberfläche bedeckt (Figuren 1 und 3) und in einer zweiten Ausführung die NTC-Dickschicht 3 nur auf einem Teil der Substratoberfläche aufgebracht ist (Figuren 2 und 4). Die Dicke der NTC-Schicht 3 und somit der Widerstand kann durch die Anzahl der Bedruckungsvorgänge eingestellt werden.

Bei der Aufbringung der Elektroden 4 kann - wie oben erwähnt - zwischen Dünn- und Dickschichttechnologie unterschieden werden. Die Herstellung der Dünnschichtelektrode kann durch Sputtern oder Aufdampfen erfolgen. Dabei besteht die Basiselektrode in einer ersten Ausführung aus einer Nickelschicht, die Anteile von Vanadium aufweisen kann. Eine nickelhaltige Schicht erlaubt eine besonders gute mechanische und elektrische Anbindung, insbesondere an die Keramik.

Ein Anteil an Vanadium kann insbesondere aus prozesstechnischen Gründen bei einem Sputterverfahren von Vorteil sein. Beispielsweise ist Vanadium in einem Gewichtsanteil von bis zu 7% in der nickelhaltigen Schicht vorhanden. Nickel ist beispielsweise in einem Gewichtsanteil von mindestens 93% vorhanden. Die Dicke der nickelhaltigen Schicht liegt beispielsweise im Bereich von 0,3 µm bis 10 µm.

In einer zweiten Ausführungsform besteht die Basiselektrode aus zwei Schichten, wobei die untere Schicht Chrom oder Titan aufweist und die zweite Schicht aus Nickel besteht, die ebenfalls Anteile von Vanadium aufweisen kann.

Die Basiselektrode kann durch eine Deckschicht bestehend aus einem oxidationshemmenden Metall wie z.B. Silber, Gold, Kupfer, Aluminium etc. geschützt werden. Diese Deckelektrode kann nur zum reinen Korrosionsschutz (Oxidation) der Nickel-Basiselektrode dienen oder auch für die Kontaktierung vorteilhaft oder sogar notwendig sein.

Im Falle einer Anbindung mittels Ag-Sintern mit feindispersen Silberpasten ist zum Beispiel eine Silber-Deckelektrode notwendig. Für eine besonders migrationsbeständige, Silber- und bleifreie Anbindung kann eine Gold-Deckschicht aufgebracht werden.

Auf der NTC-Dickschicht 3 werden zwei Elektrodenpads aufgebracht, die durch den Freibereich 5 räumlich voneinander getrennt sind, wie aus den Figuren 1 bis 4 ersichtlich ist. Die Dicke der Basiselektrode beträgt in Abhängigkeit vom späteren Kontaktierverfahren mittels Ag-Sintern oder Löten weniger als 10 µm, vorteilhafterweise weniger als 3 µm, idealerweise weniger als 0,5 µm. Die Dicke der Deckelelektrode kann bis zu 1 µm, in Ausnahmefällen bis zu 20 µm betragen.

In einer weiteren Variante werden die Elektroden 4 mittels Dickschichttechnologie auf die NTC-Dickschicht 3 aufgedruckt, wodurch dickere Elektrodenschichten realisierbar sind.

Die metallisierten Substrate werden elektrisch vorgemessen. Anhand der Vormessdaten wird die Geometrie des Flip-Chip-Sensorelements definiert. Da die Länge in den meisten Fällen fixiert ist, bleibt als variable Größe die Breite als Einstellparameter.

Für besonders eng tolerierte Widerstände bei Nenntemperatur kann - wie oben beschrieben - mit einem zusätzlichen Trimmprozess der Widerstand der einzelnen Bauelemente eingestellt werden. Dabei wird Keramikmaterial oder Elektrodenmaterial durch z.B. Laserschneiden, Schleifen, Einsägen partiell so entfernt, dass durch die Geometrieveränderung der Widerstand angepasst wird.

Um die Langzeitstabilität der Keramik zu verbessern kann über den unmetallisierten Bereich eine dünne nicht leitende Schutzschicht aufgebracht werden, die z.B. aus Keramiken, Gläsern, Kunststoffen oder Metalloxiden besteht. Diese kann durch Sputtern, Aufdampfen, Lithographie oder Aufdrucken und Einbrennen erzielt werden.

Für den Einsatz auf Platinen wird der so metallisierte NTC-Dickschichtsensor 1 auf die Leiterbahn geklebt, gelötet oder gesintert. Der Ag-Sinterprozess kann unter Druck oder drucklos erfolgen. Eine weitere Kontaktierung mittels Drähten oder Bonden ist nicht erforderlich.

Gegenüber dem Stand der Technik ermöglichen die entsprechenden NTC-Dickschichtsensoren 1 durch die Silbersinterbarkeit für beide Elektroden 4 und ohne die hohe mechanische Belastung durch Bonden, bei dem die Gefahr von Mikroschädigungen besteht, einen Aufbau mit gesteigerter Zuverlässigkeit auch bei erhöhter Anwendungstemperatur.

Durch das Design des NTC-Dickschichtsensors 1 kann dieser in nur einem Prozessschritt (Drucksintern oder Löten) auf Platinen aufgebracht werden. Eine weitere Kontaktierung z.B. mittels Bonden entfällt dadurch.

Weiterhin besteht ein Vorteil in der geringeren thermischen Belastung des NTC-Dickschichtsensors 1 im Herstellprozess. Aufgrund des Aufbringens der Elektrode 4 mittels Sputtern entfällt dadurch das Einbrennen einer Metallisierungspaste bei Temperaturen von 700 - 900°C. Zusätzlich wird die mechanische Stabilität des Sensorelementes 1 durch die Verwendung von keramischen Trägermaterialien auf Basis von z.B. Al₂O₃, Zr0₂, ATZ- bzw. ZTA Materialien oder MgO erhöht.

Die Herstellung des Flip-Chip-NTCs 1 mit eng toleriertem Widerstand erfolgt beispielsweise auf folgende Art und Weise:
In einem ersten Schritt erfolgt die Herstellung des NTC-Pulvers. Unter diesem Schritt sind beispielsweise Einwaage, Naß-Vormahlung, Trocknung, Siebung, Kalzination, Naß-Nachmahlung, Trocknung und wieder Siebung erfasst.

Anschließend erfolgt das Einwiegen des NTC-Pulvers für die Pastenherstellung. Es folgt das Einwiegen organischer Komponenten für die Paste.

In einem weiteren Schritt werden die Pastenkomponenten durch Rühren vorhomogenisiert. Anschließend erfolgt das Homogenisieren der Pastenkomponenten mit einem 3-Walzenstuhl. In einem weiteren Schritt wird keramisches Trägermaterial mit der NTC-Paste mittels Siebdruck zumindest partiell bedruckt. In diesem Schritt wird die Geometrie des späteren Flip-Chip-NTCs festgelegt.

Anschließend wird das System aus keramischem Trägermaterial und NTC-Schicht entkohlt. In einem weiteren Schritt wird das System aus keramischem Trägermaterial und NTC-Schicht gesintert.

Anschließend erfolgt das Aufbringen von Ni/Ag-Dünnschichtelektroden mittels Sputtertechnologie auf die gesinterten Flip-Chip-NTCs. Alternativ können auch Dickschichtelektroden aufgebracht werden.

In einem weiteren Schritt erfolgt das elektrisches Messen der Wiederstände der einzelnen Flip-Chip-NTCs bei Nenntemperatur auf dem noch nicht getrennten Trägermaterial. Anschließend werden die einzelnen NTC-Schichten auf den geforderten Widerstandswert durch Laserabtrag getrimmt.

Zuletzt erfolgt das Vereinzeln der Flip-Chip-NTCs durch Sägen des Trägermaterials zwischen den gedruckten NTC-Bereichen. Durch den Trennprozess wird die endgültige Geometrie des Sensorelements 1 hergestellt. Anschließend erfolgt eine visuelle Inspektion und stichprobenartige Kontrollmessung.

Die Beschreibung der hier angegebenen Gegenstände ist nicht auf die einzelnen speziellen Ausführungsformen beschränkt. Vielmehr können die Merkmale der einzelnen Ausführungsformen - soweit technisch sinnvoll - beliebig miteinander kombiniert werden.

### Bezugszeichenliste

- 1: Sensorelement
- 2: Träger
- 3: NTC-Schicht
- 4: Elektrode
- 5: Freibereich
- 6: Aussparung
- 7: Freirand

## Patentansprüche

1. Sensorelement (1) zur Temperaturmessung, aufweisend
- einen keramischen Träger (2),
- wenigstens eine NTC-Schicht (3), wobei der Träger (2) mit der NTC-Schicht (3) bedruckt ist, wobei die NTC-Schicht (3) zumindest einen Teil einer Oberfläche des Trägers (2) bedeckt, wobei die NTC-Schicht (3) eine Aussparung (6) aufweist, und wobei die Aussparung (6) dazu vorgesehen ist, den Widerstand der NTC-Schicht (3) einzustellen,
wobei das Sensorelement (1) zu einer drahtlosen Kontaktierung ausgebildet ist, wobei das Sensorelement (1) dazu ausgebildet ist, auf eine Leiterbahn geklebt, gelötet oder gesintert zu werden und wobei das Sensorelement (1) ein NTC-Dickschichtsensor ist.

2. Sensorelement (1) nach Anspruch 1,
aufweisend wenigstens zwei Elektroden (4), wobei die Elektroden (4) auf der NTC-Schicht (3) angeordnet sind, und wobei die Elektroden (4) durch einen Freibereich (5) räumlich voneinander getrennt sind.

3. Sensorelement (1) nach Anspruch 1 oder 2,
wobei die NTC-Schicht (3) eine erste Oberfläche des Trägers (2) vollständig bedeckt.

4. Sensorelement (1) nach einem der Ansprüche 1 bis 3,
wobei ein Widerstand der NTC-Schicht (3) durch eine Anzahl der Bedruckungsvorgänge bestimmt ist.

5. Sensorelement (1) nach einem der Ansprüche 1 bis 4,
wobei die jeweilige Elektrode (4) wenigstens eine gesputterte Schicht aufweist.

6. Sensorelement (1) nach Anspruch 5,
wobei die gesputterte Schicht direkt auf die NTC-Schicht (3) aufgebracht ist.

7. Sensorelement (1) nach einem der Ansprüche 1 bis 4,
wobei die jeweilige Elektrode (4) wenigstens eine aufgedruckte Schicht aufweist.

8. Sensorelement (1) nach Anspruch 7,
wobei die aufgedruckte Schicht direkt auf die NTC-Schicht (3) aufgedruckt ist.

9. Sensorelement (1) nach einem der Ansprüche 2 bis 8,
wobei die Elektroden (4) so ausgebildet und angeordnet sind, dass die Elektroden (4) silbersinterbar sind.

10. Verfahren zur Herstellung eines Sensorelements (1) gemäß einem der Ansprüche 1-9 aufweisend die folgenden Schritte:
- Bereitstellen eines keramischen Trägermaterials;
- Zumindest teilweises Bedrucken des Trägermaterials mit einer NTC-Paste zu Ausbildung einer NTC-Schicht (3), wobei das Bedrucken in wenigstens einem Bedruckungsvorgang erfolgt;
- Sintern des Systems aus Trägermaterial und NTC-Paste;
- Aufsputtern von Dünnschichtelektroden auf die NTC-Schicht (3),
- Partielles Entfernen der NTC-Schicht (3) durch Laserabtrag zur Einstellung eines vorbestimmten Widerstandswerts.

11. Verfahren nach Anspruch 10,
wobei eine Dicke und ein Widerstand der NTC-Schicht (3) durch eine Anzahl der Bedruckungsvorgänge eingestellt wird.

## Claims

1. Sensor element (1) for temperature measurement, having
- a ceramic carrier (2),
- at least one NTC film (3), wherein the carrier (2) is printed with the NTC film (3), wherein the NTC film (3) covers at least part of a surface of the carrier (2), wherein the NTC film (3) has a recess (6), and wherein the recess (6) is provided to adjust the resistance of the NTC film (3), wherein the sensor element (1) is configured for wireless contacting, wherein the sensor element (1) is configured to be adhesively bonded, soldered or sintered to a conductor track, and wherein the sensor element (1) is an NTC thick-film sensor.

2. Sensor element (1) according to Claim 1,
having at least two electrodes (4), wherein the electrodes (4) are arranged on the NTC film (3), and wherein the electrodes (4) are separated from one another spatially by a free region (5).

3. Sensor element (1) according to Claim 1 or 2,
wherein the NTC film (3) completely covers a first surface of the carrier (2).

4. Sensor element (1) according to one of Claims 1 to 3,
wherein a resistance of the NTC film (3) is determined by a number of printing operations.

5. Sensor element (1) according to one of Claims 1 to 4,
wherein the respective electrode (4) has at least one sputtered film.

6. Sensor element (1) according to Claim 5,
wherein the sputtered film is applied directly onto the NTC film (3).

7. Sensor element (1) according to one of Claims 1 to 4,
wherein the respective electrode (4) has at least one printed-on film.

8. Sensor element (1) according to Claim 7,
wherein the printed-on film is printed directly onto the NTC film (3).

9. Sensor element (1) according to one of Claims 2 to 8,
wherein the electrodes (4) are configured and arranged in such a way that the electrodes (4) are silver-sinterable.

10. Method for producing a sensor element (1) according to one of Claims 1-9, having the following steps:
- provision of a ceramic carrier material;
- at least partial printing of the carrier material with an NTC paste to form an NTC film (3), wherein printing proceeds in at least one printing operation;
- sintering of the system of carrier material and NTC paste;
- sputtering of thin-film electrodes onto the NTC film (3);
- partial removal of the NTC film (3) by laser erosion to establish a predetermined resistance value.

11. Method according to Claim 10,
wherein a thickness and resistance of the NTC film (3) is adjusted by the number of printing operations.

## Revendications

1. Élément capteur (1) pour la mesure de la température, présentant
- un support céramique (2),
- au moins une couche CTN (à coefficient de température négatif) (3), la couche CTN (3) étant imprimée sur le support (2), la couche CTN (3) recouvrant au moins une partie d'une surface du support (2), la couche CTN (3) présentant un évidement (6) et l'évidement (6) étant conçu pour régler la résistance de la couche CTN (3),
l'élément capteur (1) étant conçu pour un contact sans fil, l'élément capteur (1) étant conçu pour être collé, soudé ou fritté sur une piste conductrice et l'élément capteur (1) étant un capteur CTN à couche épaisse.

2. Élément capteur (1) selon la revendication 1, présentant au moins deux électrodes (4), les électrodes (4) étant disposées sur la couche CTN (3) et les électrodes (4) étant séparées spatialement l'une de l'autre par une zone libre (5).

3. Élément capteur (1) selon la revendication 1 ou 2,
la couche CTN (3) recouvrant complètement une première surface du support (2).

4. Élément capteur (1) selon l'une quelconque des revendications 1 à 3, une résistance de la couche CTN (3) étant déterminée par le nombre de processus d'impression.

5. Élément capteur (1) selon l'une quelconque des revendications 1 à 4, chaque électrode (4) présentant au moins une couche pulvérisée.

6. Élément capteur (1) selon la revendication 5,
la couche pulvérisée étant appliquée directement sur la couche CTN (3).

7. Élément capteur (1) selon l'une quelconque des revendications 1 à 4, chaque électrode (4) présentant au moins une couche imprimée.

8. Élément capteur (1) selon la revendication 7,
la couche imprimée étant imprimée directement sur la couche CTN (3).

9. Élément capteur (1) selon l'une quelconque des revendications 2 à 8, les électrodes (4) étant conçues et disposées de manière telle que les électrodes (4) peuvent être frittées à l'argent.

10. Procédé pour la fabrication d'un élément capteur (1) selon l'une quelconque des revendications 1-9, présentant les étapes suivantes :
- mise à disposition d'un matériau support céramique ;
- impression au moins partielle d'une pâte CTN sur le matériau support pour former une couche CTN (3), l'impression ayant lieu en au moins un processus d'impression ;
- frittage du système constitué par le matériau support et la pâte CTN ;
- pulvérisation d'électrodes à couche mince sur la couche CTN (3) ;
- élimination partielle de la couche CTN (3) par enlèvement au laser pour le réglage d'une valeur de résistance prédéfinie.

11. Procédé selon la revendication 10,
une épaisseur et une résistance de la couche CTN (3) étant réglées par le nombre de processus d'impression.
